# EUROPÄISCHE PATENTANMELDUNG

(11) **EP 2 063 209 A1**
(43) Veröffentlichungstag der Anmeldung: **27.05.2009**
(21) Anmeldenummer: 07022650.1
(22) Anmeldetag: 22.11.2007
(51) Int. Cl.: F28D 20/00

(54) **Schichtlade-Speichersystem**

(71) Anmelder: Wallnöfer, Heinrich Franz, 39026 Prad am Stilfserjoch BZ (IT)
(72) Erfinder: Wallnöfer, Heinrich Franz, 39026 Prad am Stilfserjoch BZ (IT)

(57) **Zusammenfassung**

Die Erfindung betrifft einen Schichtlade-Wärmespeicher (1), bestehend aus einem Behälter, in den ein Wärmeträger, zum Beispiel Heizungswasser, temperaturgeschichtet eingebracht wird. Zum Erhitzen des Wärmeträgers wird ein Wärmetauscher (2b) benützt, der unterhalb des Behälterbodens angebracht ist. Die Wärme bezieht der Wärmetauscher z.B. von einer Solaranlage oder einem Heizkessel o.ä.. Der Wärmetauscher-Behälter (2) ist auf seiner Oberseite mittels einer mehrfachen Steigleitung (3a) (3b) (3c) in der Achse des Speicherbehälters mit diesem auf verschiedenen Höhen des Speichers strömungsverbunden. Der Wärmetauscher-Behälter (2) ist auf seiner Unterseite mit dem Speicherbehälter mittels außen verlaufenden Rohrleitungen (4) (5) im untersten Speicherbereich (absperrbar(4a)) und im mittleren Speicherbereich strömungsverbunden. So besteht eine Ringleitung zwischen Speicher und Wärmetauscher.
Sobald der Wärmeträger im Wärmetauscher-Behälter (2) wärmer ist als im Speicherbehälter (1), steigt er schwerkraftbedingt durch die Steigleitungen (3a)(3b)(3c) auf und heizt vorrangig, weil mit geringstem Widerstand, den obersten Speicherbereich. Sobald der oberste Bereich auf die Wärmetauscher-Temperatur aufgeheizt ist, herrscht Gleichgewicht und die Aufströmung und Ladung dorthin hört auf. Daraufhin wird bei Temperaturunterschied der mittlere und zuletzt der untere Speicherbereich aufgeheizt. Es braucht dazu keine Ladepumpe, keine Umschaltventile und keine el. Steuerung. Wir nützen einfach thermophysikalische Kräfte aus. Die laminare Ausströmung aus den Steigleitungen auf mehreren Höhen und die Speicherladung von oben nach unten bewirkt eine effektive Schichtladung im Wärmespeicher auf einfachste Art.

## Beschreibung

Die Erfindung betrifft einen Wärmespeicher mit einem Behälter, wobei ein Wärmetrager temperaturgeschichtet eingebracht wird, wozu ein Wärmetauscher zum Erhitzen des Wärmeträgers benutzt wird, der unterhalb des Behälters angebracht ist, und wobei der Wärmeträger mittels einer mehrfachen Steigleitung in der Achse des Speicherbehälters auf verschiedenen Höhen des Speichers mit dem Speicherinhalt strömungsverbunden ist.

Bekannt sind Speicher, bei denen der Wärmetauscher außen am Speicherbehälter angebracht ist und wo die ebenfalls außen montierte Steigleitung auf verschiedenen Höhen mit dem Speicherbehälter verbunden sind.

Bekannt sind Speicher, bei denen der Wärmetauscher innerhalb des Speicherbehälters auf dem Speicherboden angebracht ist, und ein einzelnes Steigrohr von der Wärmetauscherhülle aufsteigt und auf verschiedenen Speicherhöhen Öffnungen hat, die zum Teil mit Klappen versehen sind. Der kalte Wärmeträger (das Heizwasser) auf dem Speicherboden, der dort den Wärmetauscher umgibt, dringt dabei unten seitlich in die Wärmetauscherhülle ein.

Um in einem Behälter das Wasser mit möglichst wenig Wärmeverlusten hochtemperaturig zu speichern, ist eine Ladung in Temperaturschichten anzustreben. Das Ziel unserer Erfindung ist ein Warmwasserspeicher-Ladesystem auf einfachste natürlichste Art, bei dem die Temperaturladung (Aufheizung) des Speicherwassers als Schichtladung in laminarer Weise ohne Turbulenzen geschieht, und zwar zuerst möglichst oben im Speicher, damit schnell warmes Brauchwasser zur Verfügung steht, dann wenn der obere Teil aufgeheizt ist, ca. in die Mitte und zuletzt im untersten Bereich.

Das Ziel des beschriebenen Speicherladesystems mit vertikaler Schichtladung wird erreicht, indem das primäre heiße Wärmeträgermittel als flüssiges Heizmittel, das z.B. aus einer Solaranlage oder einer anderen Wärmequelle kommt, an einen Wärmetauscher abgegeben wird, der außerhalb und unterhalb des Speichers angebracht ist, wobei der aufgeheizte sekundäre Wärmeträger im Wärmetauscher über einen Ladekreis mittels Schwerkraftwirkung durch thermische Gewichtsverlagerung, ohne Pumpenbetrieb in den Speicher hineingeladen wird, und zwar zuerst oben ,dann in der Mitte und dann unten. Dazu ist der Wärmetauscherbehälter über mehrere Rohre, die durch den Speicherboden hindurch in den Speicher hinauf führen, mit dem Speicherwasser verbunden. Bei mittleren Speichergrößen werden 3 Stück mit Zwischenabstand ineinander verlaufende Rohre verwendet, wobei das innerste Rohr bis in den obersten Speicherbereich führt, das äußere bis ca. zur Speichermitte und das äußerste bis zum untersten Speicherdrittel.

Das innerste längste Rohr mündet frei nach oben aus, das mittlere ist oben geschlossen und mündet über seitliche nach unten geneigte Rohrstutzen inden Speicher aus, das äußerste ist auch oben geschlossen, und mündet gegenüber den oberen über etwas längere seitliche nach unten geneigte Rohrstutzen aus. Die Steigrohre können auch nebeneinander stehend verlegt werden. Der unterste Bereich des Speichers ist mittels einer Außen-Rohrleitung mit Absperrhahn mit dem Wämetauscherbehälterboden verbunden. Der mittlere Bereich des Speichers ist ebenfalls mittels einer Außenrohrleitung mit dem Wärmetauscherbehälterboden verbunden. Durch diese Rohrverbindungen entsteht für den Wärmeträger zwischen dem Speicher-Behälter und dem Wärmetauscherbehälter ein geschlossener Umlauf wobei der Wärmeträger (das Heizwasser) zirkulieren kann.

Dadurch dass für diesen Umlauf die Schwerkraftwirkung ausgenutzt wird, werden selbstregelnd und ohne sonst nötige Pumpen und elektronische Geräte mit Abtastfühlern und

Umschaltventilen nur Temperaturen in den Speicher eingespeist, die für diesen interessant sind, d.h. nur Temperaturen, die höher sind als die in den entsprechenden Speicher-Einspeishöhen.

Die vom System dieser Anmeldung erstrebte und erreichte turbulenzfreie Temperatur-Schichtladung im Speicherbehälter mit primärer oberer Ladung ist aus dem Grunde vorteilhaft, weil dadurch auch bei wenig Sonne am schnellsten im oberen Speicherbereich Wasser auf brauchbare Duschwassertemperatur aufgeheizt wird und zum Duschen zur Verfügung steht.

Bei turbulenter Ladung z.B. mit einer Ladepumpe dauert es viel länger, bis eine wegen Durchwirbelung größere bewegte Wassermenge auf Duschtemperatur kommt. Auch sind bei turbulenter Ladung die Wärmeverluste viel größer.

Die turbulenzfreie Schichtladung im Speicherbehälter wird beim System dieser Anmeldung erreicht, indem das von einer Solaranlage oder einer anderen Wärmequelle aufgeheizte Speicherwasser im Wärmetauscher schwerkraftbedingt im zentralen Innenrohr aufsteigt sobald die Temperatur im Wärmetauscher höher ist (das Gewicht leichter) als die im oberen Speicherbereich und oben ausströmt, und zwar wegen der Trägheit der Schwerkraft laminar. Der untere Speicherbereich wird jetzt noch nicht nennenswert berührt, bleibt also ruhig geschichtet. Der Aufstieg des Heizwassers geschieht primär im Innenrohr, weil es dort am wärmsten ist und weil der

Aufstiegs-Widerstand dort am kleinsten ist.

Sobald der oberste Speicherbereich dieselbe Temperatur (dasselbe Gewicht) hat wie der Wärmetauscher, hört die Bewegung und Ladung dorthin auf und das Heizwasser aus dem Wärmetauscher steigt im äußeren (mittleren) Rohr auf und strömt im mittleren Speicherbereich aus, wo noch ein Temperaturunterschied zum Märmetauscher-Wasser besteht. Wenn auch dieser mittlere Speicherbereich auf gleiche Temperatur mit dem Wärmetauscher aufgeheizt ist, steigt das Wärmetauscher-Heizwasser im äußersten kurzen Steigrohr auf und strömt im unteren Speicherbereich aus.

Der Wärmetauscher wird über eine externe Rohrverbindungsleitung (Fallrohr) von der Speichermitte und eine Rohrverbindungsleitung mit Absperrhahn vom untersten Speicherbereich mit seinem Wärmetauscher-Behälterboden verbunden und so mit "kaltem" schwerem Speicherwasser versorgt, sobald über die 3 Steigleitungen das aufgeheizte Wasser nach oben steigt. Wenn der Absperrhahn in der unteren Verbindungsleitung geschlossen wird, wird nur das obere Speichervolumen aufgeheizt, das untere (unter dem Auslauf des Verbindungsrohres) bleibt ungcheizt. Anstelle des Absperrhahnes kann ein thermostatgesteuertes Motor- oder Magnetventil kommen, um stufenweise zuerst die obere, dann die untere Speicherhälfte zu heizen.

Dem Auslauf des Heizwassers aus dem mittleren und untersten Steigrohr wird ein Widerstand gesetzt, indem der Auslauf frei nach oben geschlossen wird und nur über zwei oder mehrere leicht fallende Abzweigrohre erfolgen kann. Die Abzweigrohre des mittleren Steigrohres sind kürzer als die Abzweigrohre des äußersten untersten Steigrohres. Diese Anordnung verstärkt die gewollte primäre Speicherladung oben und darauf folgend mittig und zuletzt unten.

Der unter dem Speicherbehälter angebrachte Wärmetauscher, das Bindeglied des primären Heizquellekreislaufes (z.B. einer Solaranlage) und des sekundären Speicherlade-Kreislaufes besteht aus einem coachsial unter dem Speicherboden angebrachten runden Behälter, dessen oberer Deckel parallel zum Speicherboden gewölbt ist, oder wo der Speicherboden selbst den oberen Deckel bildet, das heißt, der Behältermantel an den Speicherboden aufgeschweißt ist. Der untere Deckel oder Boden des WT-Behälters ist zur Achse hin konkav nach oben gewölbt zwecks Druckformbeständigkeit und um für das zentrale Anschlussrohr Platz zu schaffen. Der Speicherbehälterboden kann anstatt nach unten gewölbt auch nach oben gewölbt sein. In den WT-Behälter bauen wir als Wärmetauscherfläche vorzugsweise ein Kupferkammrohr ein, das wir wie eine Uhrfeder oder Schnecke einlagig von außen nach innen einwinden, dann nach unten gehend eine zweite Lage von innen nach außen aufwinden, dann wieder nach unten gehend und für eine dritte Lage von außen nach innen einwinden. Die gewünschte WT-Oberfläche bestimmt den Umfang und die Anzahl der Lagen. Zwecks gleichmäßigem Durchfluss des Sekundärwassers von unten nach oben in den Spirallagen innen und außen kann in der Achse der Spiralschnecke ein trichterförmiges Leitblech eingebaut werden.

Das Primärkreiswasser rinnt im Gegenstrom zum Sekundärkreiswasser von Spiraletage zu Spiraletage von oben nach unten.

Die Steigrohre im Speicherbehälter, der Speicherboden zwischen dem Speicherbodenwasser und dem darunter liegenden Wärmetauscher sowie der Wärmetauscherbehälter müssen rundum wärmegedämmt sein, um die Reaktionsschnelligkeit des Schwerkraft-Wärmetauschers nicht zu reduzieren.

Die Erfindung wird im Folgenden an Hand einer Zeichnung näher erklärt. Dabei zeigt:
Fig. A: einen Längsschnitt durch den Speicherbehälter mit nach unten gewölbtem Behälterboden und darunter angebautem Spiralrohr-Wärmetauscher.
Fig. B: einen Längsschnitt durch den unteren Teil des Speicherbehälters mit nach oben gewölbtem Behälterboden.
Fig. A zeigt einen Speicherbehälter (1) mit traditionellem nach unten gewölbtem Behälterboden (1a) mit interner Wärmedämmung (1b). Unter dem Behälterboden angebaut ist der Wärmetauscherbehälter (2) mit einem zylinderförmigen Mantel und mit mittig nach oben gewölbtem Behälterboden (2a). (2b) zeigt das in den Behälter (2) eingebaute Spiralförmige mehrlagige Wärmetauscherrohr, wozu zwecks großer spezifischer Oberfläche und guter Wärmeleitung vorwiegend ein KupferKammrohr verwendet wird. Als primäre Heizquelle kann eine Solaranlage, ein Heizofen, eine Wärmepumpe oder dgl. dienen. Vom Wärmetauscherbehälter (2) zentrisch durch den Speicherbehälterboden (1a) hindurch führen die drei Steigleitungen (3a)(3b)(3c) in den Speicherbehälter (1) hinauf, wobei das innerste längste Rohr (3a) bis in das oberste Drittel oder Viertel der Speicherbehälterhöhe reicht und dort frei ausläuft. Das zweite Steigrohr (3b) welches das innerste, einen Zwischenspalt frei lassend, umgibt, endet ca. in der Mitte der Speicherbehälterhöhe, ist oben geschlossen und mündet in zwei oder mehrere leicht nach unten weisende Rohrabgangstutzen (3d). Das dritte Steigrohr (3c) welches das zweite umgibt, endet auf ca. 1/3 oder 1/4 der Speicherbehälterhöhe, ist oben geschlossen und mündet in zwei oder mehrere leicht nach unten weisende Rohrabgangstutzen (3d'), die länger sind als die Abgangstutzen (3d).

Die freien Steigrohroberflächen sind wärmegedämmt (3e), damit das Heizwasser auf dem Weg nach oben nicht nennenswert abkühlt. Auch der Närmetauschermantel (2d) und der Wärmetauscherboden sind gut wärmegedämmt.

Vom untersten Bereich des Speicherbehälters (1) führt eine Außen-Rohrleitung mit Absperrventil (4a), auf Wunsch mit thermostatgesteuertem motorischem Antrieb hinunter unter den Boden des Wärmetauschers und mündet mittig zentrisch in den Wärmetauscher hinein.

Vom mittleren Bereich des Speicherbehälters (1) führt eine Außenrohrleitung (5) hinunter in die Rohrleitung (4) hinter dem Absperrventil (4a). Diese Leitungen (4) und (5) sind wärmegedämmt.

Für die Gewinnung von warmem Sanitärwasser ist im Speicherbehälter nahe der Innenwand eine von unten nach oben gewundene Rohrleitung (6) verlegt: dadurch kann dieser Speicher für die sanitäre Warmwassergewinnung und für die Raumheizung verwendet werden.

Fig. B zeigt den untersten Teil des Speicherbehälters (1) mit einem mittig nach oben gewölbten Spiecherbehälterboden (1a'). Diese Form ist betreffend die Wärmetauscherfunktion strömungsmäßig günstiger und wird bevorzugt. Die übrigen Bestandteile sind wie laut Fig. A gefertigt.

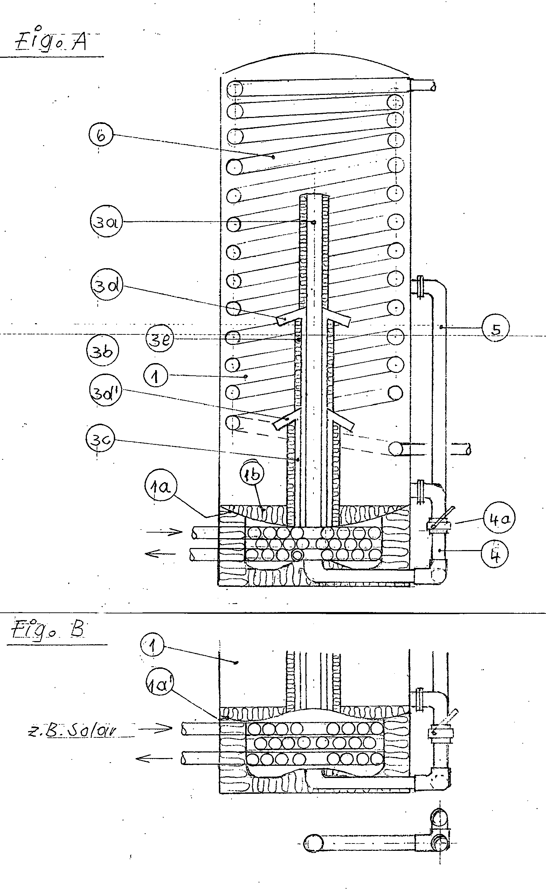

## Patentansprüche

1. Wärmespeicher mit Behälter (1), wobei ein Wärmeträger, z.B. Heizwasser, temperaturgeschichtet eingebracht wird, wozu ein Wärmetauscher (2) zum Erhitzen des Wärmeträgers benützt wird, und wobei der Wärmeträger mittels einer Steigleitung in der Achse des Speicherbehälters (1) auf verschiedenen Höhen des Speicherbehälters strömungsverbunden ist,
**dadurch gekennzeichnet, dass** der Wärmetauscherbehälter (2) extern und unterhalb des Speicherbehalterbodens (1a)(1a') angebracht ist, und dass mehrere Steigleitungen vom Wärmetauscher aufwärts in der Achse des Speicherbehälters aufsteigen und aus drei oder mehreren ineinander liegenden oder nebeneinander montierten Rohren bestehen (3a)(3b)(3c), die auf verschiedenen Höhen enden und dort in leicht nach unten geneigten Auslaufrohren (3d)(3d') ausmünden, wobei mit dem Wärmetauscher (2) ein schwerkraftkuntkionsbedingter Auftrieb entsteht.

2. Wärmespeicher nach Anspruch 1.,
**dadurch gekennzeichnet, dass** vom untersten Bereich des Speicherbehälters (1) ein wärmegedämmtes Abgangsrohr (Fallrohr) mit Absperrventil (4)(4a) außerhalb des Speicherbehälters nach unten geführt wird und am Wärmetauscherbehälterboden mittig in den Wärmetauscherbehälter (2) mündet, wodurch der Wärmeträger vom Wärmetauscher (2) über die Steigleitungen (3a)(3b)(3c) mit den Ausmündungen (3a) oben, (3d) und (3d') in den Speicherbehälter (1) und über die Fallleitungen (4) und (5) einen Schwerkraft-Ladekreis bilden.

3. Wärmespeicher nach Anspruch 1. und 2.,
**dadurch gekennzeichnet, dass** vom mittleren Bereich der Speicherbehälterhöhe oder etwas höher oder tiefer ein weiteres wärmegedämmtes Abgangsrohr (5)(Fallrohr) außerhalb des Speicherbehälters nach unten führt und unterhalb des Absperrventils (4a) in das Fallrohr (4) mündet, wobei dann bei geschlossenem Absperrventil (4a) nur die obere Hälfte des Speichers geladen (beheizt) wird.

4. Wärmespeicher nach Anspruch 1., 2., 3.,
**dadurch gekennzeichnet, dass** der Speicherbehälterboden, und somit der Wärmetauscherbehälteroberboden nach unten gewölbt sind Fig. A (1a) oder wellenförmig nach unten und mittig nach oben gewölbt sein können Fig. B (la') oder auch nur nach oben gewölbt sind, wobei auch die Varianten möglich sind, den Wärmetauscherbehälter als selbständigen Behälter unabhängig vom Speicherbehälterboden zu fertigen.

5. Wärmespeicher nach Anspruch 1., 2., 3., 4.,
**dadurch gekennzeichnet, dass** im externen Wärmetauscherbehälter (2) unter dem Speicherbehälter primärkreismäßig ein- oder mehrlagige horizontal liegende schneckenförmig aufgerollte Rohrspiralen Fig. A (2b) eingebaut sind, deren Oberflächen in heißem Zustand den Sekundärkreis-Warmetrager (das Heizwasser) aufheizen und mittels Schwerkraftwirkung zum aufsteigen, umlaufen und turbulenzfreien Schichtladen bewegen.

6. Wärmespeicher nach Anspruch 1., 2., 3., 4., 5.,
**dadurch gekennzeichnet, dass** die zum Speicherwasser hin freien Steigleitungsoberflächen (3e), der Boden des Speicherbehälters (1b), die Oberfläche des Wärmetauscherbehälters (2d) und die Fallrohre (4) und (5) gut wärmegedämmt sind.
